# DEMANDE DE BREVET EUROPEEN

(11) **EP 1 872 901 A1**
(43) Date de publication de la demande: **02.01.2008**
(21) Numéro de dépôt: 07301170.2
(22) Date de dépôt: 28.06.2007
(51) Int. Cl.: B23Q 11/00, B27G 13/02

(54) **Outil d'usinage rotatif, en particulier de type outil rotatif coupant, avec dispositif pour la charge de poussières et de copeaux**

(30) Priorité: 29.06.2006 FR 0605855
(71) Demandeur: A.O.B., 85290 Mortagne sur Sèvre (FR)
(72) Inventeur: Le Bris, Alain, 49300 Cholet (FR)
(74) Mandataire: Michelet, Alain

(57) **Abrégé**

La présente invention concerne un outil d'usinage rotatif, en particulier de type outil coupant rotatif, du genre foret ou fraise, comprenant un corps (3) de forme générale allongée et axiale, composé d'une partie avant (5) de coupe et d'une partie arrière (6) d'attachement.

Selon l'invention, le corps d'outil (3) comporte des moyens structurels complémentaires (2) formant turbine d'aspiration, munis de plusieurs pales radiales (10), ou sensiblement radiales, chacunes délimitées par deux bordures libres (10a,10b) s'étendant dans un plan perpendiculaire, ou au moins sensiblement perpendiculaire, par rapport à l'axe (4) de l'outil d'usinage (1), l'une avant (10a) orientée du côté de la partie avant de coupe (5), et l'autre arrière (10b) orientée du côté de la partie arrière d'attachement (6).

La mise en rotation de l'outil d'usinage génère alors un flux d'air circulant depuis la bordure avant (10a) des pales vers leur bordure arrière (10b), destiné à entraîner au moins une partie des poussières et/ou copeaux générés lors de l'usinage, en particulier vers des organes de captage équipant ladite machine-outil.

## Description

La présente invention concerne les outils d'usinage rotatifs, et en particulier les outils coupants rotatifs dont le corps a une forme générale allongée et axiale notamment du genre foret ou fraise.

L'usinage de certains matériaux, notamment le bois massif, les panneaux de bois aggloméré ou le métal, génère des quantités importantes de poussières et de copeaux que l'on cherche à capter efficacement pour garantir une bonne qualité d'usinage, pour réduire l'usure des outils et aussi pour limiter la salissure des machines-outils ainsi que des locaux.

A cet effet, dans la plupart des cas, les machines-outils d'usinage sont équipées de dispositifs de captage par aspiration des copeaux et des poussières. La conformation de ces dispositifs de captage est notamment conditionnée par le type d'outils d'usinage équipant la machine-outil et par les caractéristiques d'émission des particules (selon la direction et l'amplitude de leur projection notamment).

Cependant, les dispositifs de captage actuellement mis en oeuvre n'assurent pas une collecte optimale des particules générées lors de l'usinage ; c'est notamment le cas pour les outils rotatifs de forme générale allongée et axiale comme par exemple les forets et les fraises.

Pour améliorer la collecte des poussières et des copeaux, il est connu d'utiliser des moyens structurels complémentaires aptes à générer, lors de la mise en rotation de l'outil, un flux d'air assurant, d'une part, l'évacuation de ces copeaux ou poussières hors de la zone de travail, et d'autre part, leur orientation vers le dispositif de captage associé.

C'est notamment le cas de l'outil d'usinage rotatif décrit dans le document US-A-5 772 367. L'outil rotatif en question consiste en un foret équipé d'un organe formant turbine d'aspiration composé d'un élément tronconique muni de deux ouvertures opposées :
- l'une avant de petit diamètre, côté foret, et
- l'autre arrière de grand diamètre et de forme générale annulaire périphérique.
Cet élément tronconique intègre une pluralité de pales radiales dont la bordure périphérique libre s'étend transversalement par rapport à ladite grande ouverture.
En pratique, le flux d'air généré par cette turbine d'aspiration, en rotation, chemine axialement au travers de la « petite » ouverture, passe au niveau de la bordure avant libre des pales et ressort au travers la « grande » ouverture annulaire arrière (au niveau de la bordure périphérique libre et transversale des pales) selon une orientation du type centrifuge.

Une telle turbine possède une aire active d'aspiration relativement ciblée (correspondant au diamètre de sa petite ouverture avant), ce qui est efficace en association avec les outils d'usinage de type forets. Cependant, ce type d'aire d'aspiration ciblée constitue un inconvénient pour les outils tels que les fraises, où les poussières et/ou copeaux générés lors de l'usinage ont tendance à être projetés radialement, hors de cette zone active d'aspiration. De plus, le sens radial ou centrifuge du flux d'air sortant de cette turbine, diminue l'efficacité des dispositifs de captage lorsqu'ils sont positionnés dans l'axe de rotation de l'outil d'usinage rotatif.

Pour remédier à ces inconvénients, la demanderesse a développé un outil d'usinage rotatif équipé d'une turbine d'aspiration de structure originale et polyvalente. Cette turbine d'aspiration a l'intérêt d'être efficace aussi bien avec les outils rotatifs de type fraises que ceux de type forets. De plus, le flux d'air généré est particulièrement bien orienté pour les machines-outils dont les dispositifs de captage se situent dans l'axe de rotation appliqué à l'outil d'usinage.

L'outil d'usinage rotatif correspondant est du genre de celui décrit ci-dessus en relation avec le document US-5 772 367, en ce qu'il comprend un corps de forme générale allongée axiale, composé d'une partie avant de coupe, munie d'arêtes ou de lèvres coupantes, et d'une partie arrière d'attachement permettant son montage sur l'arbre d'entraînement rotatif d'une machine-outil adaptée, lequel corps d'outil est associé à des moyens formant turbine d'aspiration. Selon l'invention, les pales des moyens formant turbine sont chacune délimitées par deux bordures libres s'étendant chacune dans un plan perpendiculaire, ou au moins sensiblement perpendiculaire, par rapport à l'axe de l'outil d'usinage, l'une avant, orientée du côté de la partie avant de coupe, et l'autre arrière, orientée du côté de la partie arrière d'attachement, la mise en rotation de l'outil générant alors un flux d'air circulant depuis la bordure avant libre des pales, vers leur bordure arrière libre.

Cet outil d'usinage rotatif présente l'intérêt de produire un flux d'air dont la surface active d'aspiration correspond au moins à l'encombrement défini par la bordure extérieure des pales. Un tel flux d'aspiration est en particulier efficace et intéressant pour les outils d'usinage rotatifs de type fraises, dans laquelle les poussières et/ou copeaux ont tendance à être projetés radialement lors de l'usinage ; en effet, les poussières et copeaux générés ont une vitesse décroissant rapidement après leur projection, ce qui facilite leur entraînement et captage par le flux d'air présent.

Selon une caractéristique de réalisation, le secteur angulaire défini par les bordures avant et arrière de chacune des pales présente avantageusement un secteur compris entre 95° et 110°, ou de manière alternative, un angle compris avantageusement entre 15° et 35°. Ces pales sont de préférence au nombre de trois.

Selon encore une autre particularité, les pales sont associées à un anneau périphérique, coaxial au corps d'outil, et s'étendent avantageusement à partir d'une bague tubulaire centrale conformée pour permettre la fixation de la turbine d'aspiration au corps d'outil. L'association pales radiales/anneau périphérique vise en particulier à optimiser l'intensité et l'orientation du flux d'air généré.

Dans ce cas, l'anneau périphérique peut avoir une conformation générale cylindrique, de diamètre constant sur sa hauteur ; le flux d'air généré est alors de section sensiblement constante. Dans une variante de réalisation, cet anneau périphérique présente une conformation générale tronconique, à section droite ou courbe ; en fonction du flux d'air souhaité, la grande base de ce tronc de cône peut être située du côté de la partie de coupe ou du côté de la partie d'attachement.

Toujours pour optimiser le flux d'air généré par la mise en rotation de la turbine, la bordure avant des pales s'étend avantageusement en saillie par rapport à la bordure avant de l'anneau périphérique associé. D'autre part, la bordure arrière de ces mêmes pales s'étend avantageusement dans le plan passant par la bordure arrière de l'anneau.

Encore pour optimiser le flux d'air généré, les bordures avant et/ou arrière de l'anneau périphérique, et le cas échéant la bordure avant de la bague tubulaire centrale, peuvent présenter une conformation de type chanfreinée ou rayonnée, dont l'inclinaison est orientée pour optimiser la circulation du flux d'air au sein de la turbine.

Selon encore une forme de réalisation préférée, les moyens formant turbine sont agencés entre les parties de coupe et d'attachement, et ils sont centrés sur l'axe de rotation du corps d'outil.

Ces moyens formant turbine peuvent être réalisés monoblocs avec le corps de l'outil d'usinage associé. Mais de préférence, ils consistent en une structure rapportée sur le corps d'outil, pour former un accessoire amovible ; cet accessoire comporte à cet effet la bague cylindrique permettant sa fixation sur le corps d'outil associé.

L'invention sera encore illustrée, sans être aucunement limitée, par la description suivante de deux formes de réalisation particulières, données uniquement à titre d'exemple, et représentées sur les dessins annexés dans lesquels :
- la figure 1 est une vue générale et schématique d'un premier ensemble outil d'usinage rotatif/turbine d'aspiration, représenté selon une perspective orientée du côté de la partie avant de coupe dudit outil d'usinage ;
- la figure 2 est une vue de dessus de l'ensemble outil d'usinage/turbine d'aspiration de la figure 1 ;
- la figure 3 montre l'ensemble outil d'usinage/turbine d'aspiration des figures 1 et 2, vu de côté ;
- la figure 4 est encore une vue de côté de l'ensemble outil d'usinage/turbine d'aspiration conforme à la figure 3, dont l'anneau cylindrique périphérique n'est pas représenté pour faciliter la compréhension ;
- la figure 5 est une vue générale schématique d'un second ensemble outil d'usinage rotatif/turbine d'aspiration, là encore représenté selon une perspective orientée du côté de la partie avant de coupe dudit outil d'usinage ;
- la figure 6 est une vue de face de l'ensemble outil d'usinage rotatif/turbine d'aspiration de la figure 5, orientée du côté de sa partie avant ;
- la figure 7 montre la turbine d'aspiration des figures 5 et 6, selon un plan de coupe passant par son axe de rotation, juxtaposée à l'outil d'usinage également des figures 5 et 6, vu de côté ;
- la figure 8 est une vue de côté de l'ensemble outil d'usinage rotatif/turbine d'aspiration conforme aux figures 5 à 7.

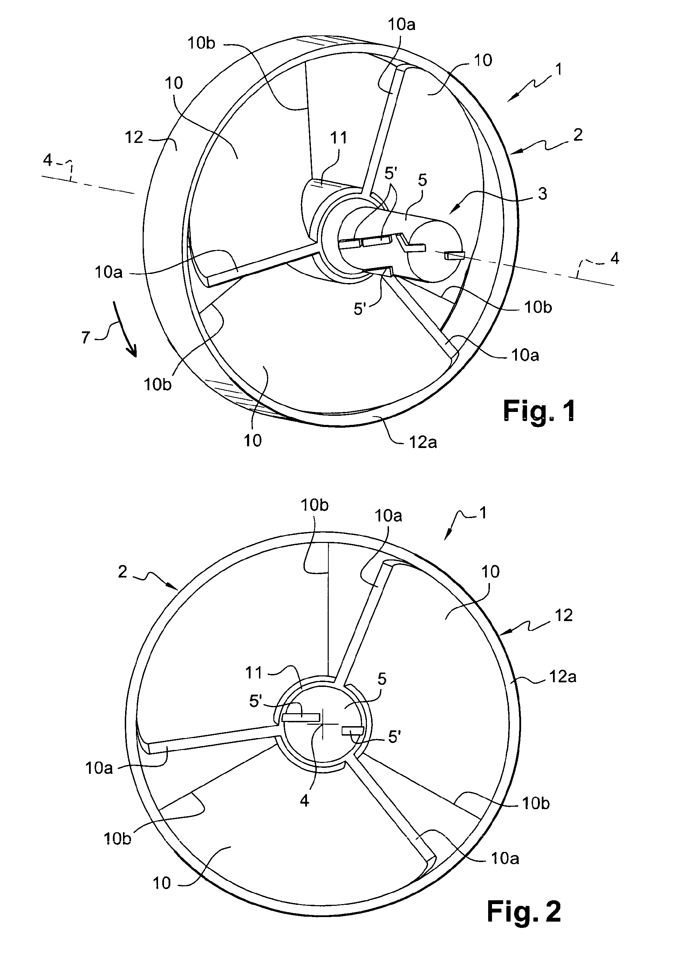

Sur les figures 1 à 4, l'outil de coupe 1, de type fraise, est associé à des moyens rapportés formant turbine d'aspiration 2 (dont la structure est détaillée par la suite).

Cet outil d'usinage 1 consiste en un corps 3 de forme générale cylindrique et allongée, comportant un axe central longitudinal 4 ; il se compose d'une partie avant 5 de coupe et d'une partie arrière 6 d'attachement à une machine-outil adaptée (non représentée).

La partie de coupe 5 est munie, de manière classique, d'une pluralité d'arêtes ou de lèvres coupantes 5', qui sont adaptées et conformées en fonction du type d'usinage que l'on souhaite réaliser.

La partie arrière d'attachement 6 est quant à elle adaptée pour permettre le montage de cet outil 1 sur le porte-outil de l'arbre central rotatif de la machine-outil associée.

De manière générale, l'outil d'usinage 1 en question est destiné à être mis en rotation autour de son axe longitudinal 4 (ce dernier correspond alors également à son axe de rotation) ; le sens de rotation appliqué à l'outil est ici orienté vers la droite, tel que symbolisé par la flèche repérée 7 sur la figure 1. Cette machine-outil comporte, en outre, des dispositifs (non représentés) de captage par aspiration des copeaux et/ou des poussières générées lors de l'usinage. De manière classique, l'ensemble peut être placé à l'intérieur d'un capotage de cloisonnement.

La turbine d'aspiration 2 est adaptée pour produire un flux d'air favorisant l'évacuation des copeaux et/ou des poussières générés tout au long de l'usinage d'une pièce à manufacturer par la partie avant de coupe 5, lorsqu'elle est entraînée en rotation avec l'outil d'usinage 1 dans le sens de la flèche 7 précitée ; ce flux d'air vise en particulier à favoriser le guidage des copeaux et/ou des poussières en direction du dispositif de captage de la machine-outil.

Plus précisément, la turbine d'aspiration 2 en question est rapportée entre les partie de coupe 5 et d'attachement 6 de l'outil d'usinage 1. Cette position de la turbine d'aspiration 2, juste en amont de la partie de coupe 5, permet en particulier une prise en charge rapide et efficace des particules à évacuer.

Cette turbine d'aspiration 2 rapportée est de préférence réalisée monobloc en matériau métallique de type acier ou en aluminium. Elle comporte plusieurs pales 10 (en l'occurrence au nombre de trois), réparties régulièrement et radialement autour de l'axe de rotation 4 de l'outil 1 (formant également l'axe central de la turbine d'aspiration 2) ; ces pales 10 s'étendent chacune entre d'une part, une bague tubulaire centrale 11 (adaptée pour la fixation de la turbine d'aspiration 2 au corps d'outil 3), et d'autre part, un anneau périphérique cylindrique 12 ; cet anneau périphérique 12 intervient en particulier pour favoriser l'orientation du flux d'air, cela ici coaxialement à l'axe de rotation 4 de l'outil d'usinage 1.

La fixation de la bague centrale 11 de la turbine 2 sur le corps d'outil 3 peut être du type nervure/clavette, filetage, frettage ou clipsage.

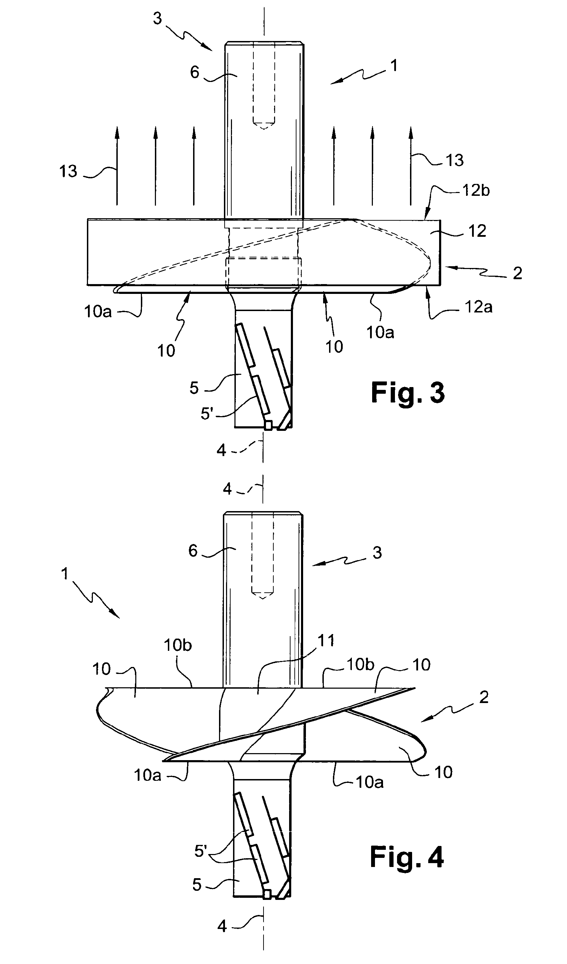

Les pales 10 ont chacune une forme générale hélicoïdale (figure 4) ; elles sont convenablement conformées pour générer le flux d'air selon une orientation depuis la partie avant 5 vers la partie arrière 6, cela lors de la rotation de l'outil d'usinage 1 dans le sens de la flèche 7 précitée.

Ces pales 10 sont chacune délimitées notamment par une bordure avant 10a, située du côté de la partie avant de coupe 5, et une bordure arrière 10b, située du côté de la partie arrière d'attachement 6.

Comme on peut le voir sur les figures 3 et 4, les bordures avant 10a et arrière 10b de ces pales 10 s'étendent chacune dans un même plan perpendiculaire à l'axe 4 de l'outil d'usinage 1. La bordure avant 10a des pales 10 s'étend en légère saillie par rapport à la bordure avant 12a de l'anneau périphérique 12 ; cette particularité structurelle a pour fonction d'améliorer encore l'orientation du flux d'air généré et le captage des particules par ce flux d'air.

Le secteur angulaire défini par les bordures avant 10a et arrière 10b de chacune de ces pales 10 présente un angle compris entre 95° et 110°. La bordure avant 10a d'une pale 10 s'étend presque dans le même plan radial que la bordure arrière 10b d'une pale 10 juxtaposée; en l'occurrence, l'angle du jour entre les bordures en regard de deux pales 10 juxtaposées est compris entre 10° et 25° (figure 3).

A titre indicatif, la turbine d'aspiration a un diamètre de 110 mm ; l'anneau 12 a une hauteur de 20 mm, et les pales radiales 10 ont quant à elles une hauteur de 25 mm ; la bordure avant 10a de ces pales 10 est en saillie de 4 mm par rapport à la bordure avant 12a de l'anneau périphérique 12.

En pratique, lors de la mise en rotation de l'outil d'usinage 1 pour travailler une pièce à manufacturer, la turbine d'aspiration 2 associée génère un flux d'air (illustré par le repère 13 de la figure 3) circulant entre ses pales 10, depuis leur bordure avant 10a vers leur bordure arrière 10b, et canalisé par l'anneau périphérique cylindrique 12. Ce flux d'air a un diamètre correspondant sensiblement à celui des pales, et il favorise l'orientation des copeaux et des poussières produites par l'opération de coupe en direction du dispositif de captage de la machine-outil équipée. C'est le cas en particulier des copeaux et poussières projetés radialement lors d'un usinage par fraisage ; ces copeaux/poussières ont une vitesse diminuant rapidement, et sont alors entraînés efficacement par le flux d'air, même à distance de la fraise.

De manière alternative, les trois pales 10 de la turbine d'aspiration 2 s'étendent chacune selon un secteur angulaire compris entre 15° et 35° ; l'angle du jour entre deux pales 10 est compris entre 85° et 105°.

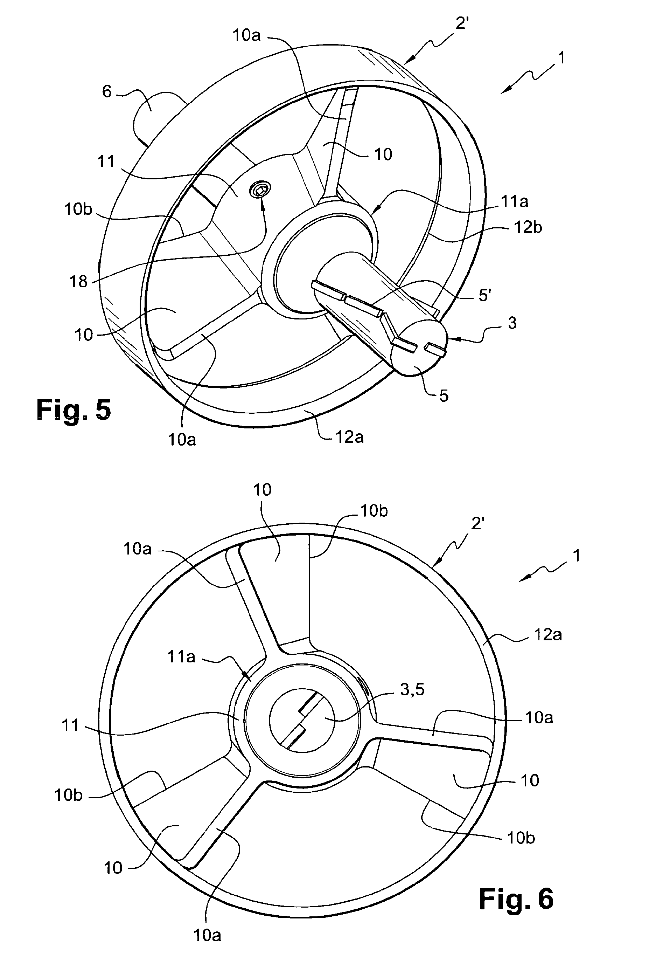

Une telle forme de turbine d'aspiration 2' est l'objet des figures 5 à 8. Pour simplifier la description de ces figures, les éléments structurels identiques à ceux décrits ci-dessus en relation avec les figures 1 à 4 sont désignés par les mêmes repères numériques.

Ainsi, sur ces figures 5 à 8, on retrouve un outil d'usinage 1 consistant en un corps 3 de forme générale cylindrique composé d'une partie avant 5 de coupe et d'une partie arrière 6 d'attachement à une machine-outil adaptée.

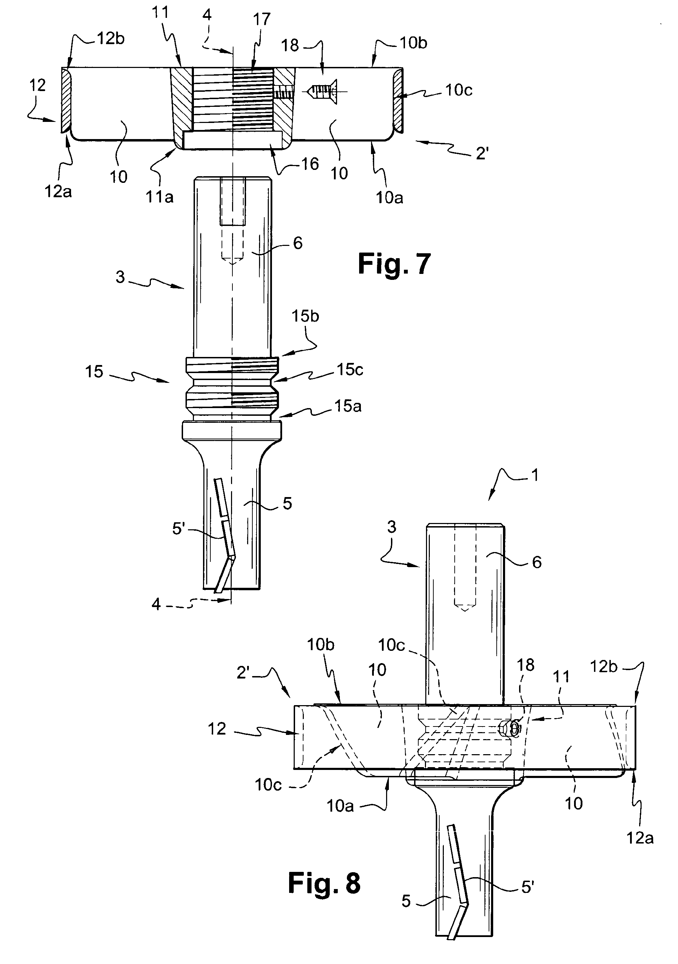

Sur la figure 7, on peut voir que ce corps d'outil 3 comporte encore des moyens structurels 15, ménagés entre les parties avant 5 et arrière 6, qui sont conformés pour recevoir les moyens formant turbine.
En l'occurrence, ces moyens de réception 15 se composent :
- d'un épaulement annulaire 15a, disposé à l'extrémité de la partie de coupe 5 et orienté côté partie d'attachement 6, et
- d'un tronçon de filetage périphérique 15b, côté partie d'attachement 6, divisé par une gorge annulaire intermédiaire 15c, avantageusement à section en U ou Vé.

Les moyens formant turbine d'aspiration 2', réalisés monobloc en matériau métallique de type acier ou aluminium, comportent plusieurs pales radiales 10 (en l'occurrence au nombre de trois), réparties régulièrement autour de l'axe de rotation 4 de l'outil 1. Ces pales 10 s'étendent chacune entre d'une part, une bague tubulaire centrale 11 (adaptée pour la fixation de la turbine d'aspiration 2' au corps d'outil 3), et d'autre part, un anneau périphérique cylindrique 12, intervenant en particulier pour favoriser l'orientation du flux d'air.

En l'occurrence, la bague centrale 11 est conformée pour coopérer avec les moyens de réception 15 prévus à cet effet sur le corps d'outil 3.
Pour cela, la bague 11 comporte :
- un logement annulaire 16 du type lamage, du côté de sa bordure avant 11 a, destiné à prendre appui sur l'épaulement complémentaire 15a des moyens de réception 15 de l'outil 3, pour obtenir un maintien en translation du type centrage court ;
- un filetage central 17, apte à coopérer avec le filetage complémentaire 15b des moyens de réception 15, et associé à une vis-pointeau anti-desserrage 18 destinée à venir se visser dans la gorge complémentaire 15c une fois la turbine vissée sur le corps 3.

Les pales 10 sont chacune délimitées notamment par une bordure avant libre 10a, orientée du côté de la partie avant de coupe 5, par une bordure arrière libre 10b, orientée du côté de la bordure arrière d'attachement 6, et par une bordure périphérique 10c associée à la surface interne de l'anneau périphérique cylindrique 12.

Les bordures avant 10a et arrière 10b de ces pales 10 s'étendent chacune dans un plan perpendiculaire à l'axe 4 de l'outil d'usinage 1. En l'occurrence, la bordure avant 10a des pales 10 s'étend en légère saillie par rapport à la bordure avant 12a de l'anneau périphérique 12 ; d'autre part, la bordure arrière 10b des pales 10 s'étend dans le plan passant par la bordure arrière 12b de ce même anneau périphérique 12.

La turbine d'aspiration 2' se distingue de celle décrite ci-dessus en relation avec les figures 1 à 4, par le secteur angulaire défini entre les bordures avant 10a et arrière 10b de chacune de ces pales 10, qui est ici de l'ordre de 22°. L'angle entre les bordures avant 10a de deux pales juxtaposées est ainsi de l'ordre de 120°. L'aspect « étroit » des pales 10 est notamment intéressant lorsque la quantité de poussières/copeaux à évacuer est importante.

De plus, ces pales 10 forment ensemble une hélice de type évolutive ou variable.
Pour cela, les bordures intérieure et extérieure des pales 10 s'étendent respectivement selon un angle de l'ordre de 20° et de 45° par rapport à l'axe 4 de l'outil d'usinage 1.
Cette conformation particulière d'hélice « évolutive » vise en particulier à optimiser le flux d'air généré sur tout le diamètre de l'aire active d'aspiration.

Certaines au moins des bordures de la turbine 2' sont travaillées pour limiter les perturbations sur le flux d'air généré lors de la mise en rotation de la turbine d'aspiration 2.

A cet effet, les bordures circulaires avant 12a et arrière 12b de l'anneau périphérique 12 présentent une forme générale rayonnée (ici de type en quart de cercle).
Plus précisément, cet aspect « rayonné » est ménagé du côté intérieur de l'anneau périphérique 12 ; en d'autres termes, le petit diamètre de ces bordures avant 12a et arrière 12b se situe du côté de la surface intérieure cylindrique de l'anneau périphérique 12.

Sur la figure 7, on remarque encore que la bordure extérieure 10c des pales 10 épouse la bordure arrière rayonnée 10b de l'anneau périphérique 12. Cette conformation particulière vise à optimiser le flux d'air en sortie de la turbine d'aspiration, et à limiter les perturbations de ce flux d'air.

Toujours sur la figure 7, on remarque encore que la bordure avant 11a de la bague centrale 11 comporte elle aussi un aspect « rayonné » (en quart de cercle), croissant vers l'extérieur et de l'avant vers l'arrière de la turbine 2'.
Cette conformation particulière de la bague centrale 11 vise là encore à optimiser la circulation du flux d'air au sein de la turbine 2'.

Le montage de la turbine 2' sur le corps d'outil 3 consiste à introduire la partie d'attachement 6 de ce corps 3 au travers de la bague 11 de la turbine 2'. Cette turbine 2' est ensuite vissée sur le corps d'outil 3, par la coopération des filetages 15b et 17, jusqu'à ce que le lamage 16 de sa bague 11 vienne prendre appui sur l'épaulement complémentaire 15a. Ce montage est enfin verrouillé par le vissage de la vis-pointeau 18 qui vient se loger dans sa gorge de réception 15c.
On note que ce montage « par l'arrière » de la turbine 2' (par introduction côté partie attachement 6) permet en particulier d'éviter les dégradations des dents de coupes 5' par chocs avec la bague 11. De plus, cette turbine 2' est ainsi particulièrement bien maintenue en position sur le corps d'outil 3.
De manière générale, ces moyens de montage de la turbine peuvent bien entendu être mis en oeuvre au sein de l'outil décrit précédemment en relation avec les figures 1 à 4.

Ensuite, en pratique, la mise en rotation de l'outil d'usinage 1 provoque la rotation de la turbine 2', générant ainsi le flux d'air d'aspiration, comme décrit ci-dessus en relation avec les figures 1 à 4. Là encore, le flux d'air créé peut orienter efficacement les copeaux/poussières produits par un foret ou par une fraise.

De manière alternative, l'anneau périphérique 12 peut avoir une forme générale tronconique, à section droite ou courbe, sa bordure avant ayant un diamètre inférieur par rapport à sa bordure arrière, ou inversement. Selon le cas, le flux d'air ainsi généré est respectivement soit divergent, soit convergent, dans un sens s'étendant depuis l'avant vers l'arrière de l'outil d'usinage associé.

Encore de manière alternative, la turbine d'aspiration de l'outil peut être constituée uniquement par une bague tubulaire centrale 11 à partir de laquelle s'étendent les pales 10, sans présence de l'anneau périphérique cylindrique 12. Une telle turbine d'aspiration (sans anneau périphérique 12) produit, là encore, un flux d'air apte à entraîner une partie des poussières et/ou copeaux générés lors de l'usinage.

Pour être complet, l'orientation des pales décrites ci-dessus en relation avec les figures 1 à 8, peut être inversée lorsque la turbine est destinée à équiper un outil à rotation « gauche ».

De manière générale, les turbines d'aspiration selon l'invention ont l'intérêt d'assurer une évacuation optimale des copeaux et des poussières produits par l'outil d'usinage associé, aussi bien du type fraise que du type foret, vers les moyens de captage de la machine-outil. Cet avantage concourt à garantir une bonne qualité d'usinage, à réduire l'usure des outils et aussi à limiter la salissure des machines-outils ainsi que des locaux.

De manière alternative à ces turbines d'aspiration rapportées, les outils d'usinage peuvent être conçus pour comporter une turbine d'aspiration réalisée monobloc avec leur corps allongé axial.

## Revendications

1. Outil d'usinage rotatif, en particulier de type outil coupant rotatif, comprenant un corps (3) de forme générale allongée et axiale, composé d'une partie avant (5) de coupe, munie d'arêtes ou de lèvres coupantes (5'), et d'une partie arrière (6) d'attachement, permettant son montage sur l'arbre d'entraînement rotatif d'une machine-outil adaptée, ledit corps d'outil (3) comportant des moyens structurels complémentaires (2, 2') formant turbine d'aspiration, munis de plusieurs pales, aubes ou ailettes radiales (10), ou sensiblement radiales, aptes à générer, lors de la mise en rotation dudit outil d'usinage, un flux d'air destiné à entraîner au moins une partie des poussières et/ou copeaux générés lors de l'usinage, en particulier vers des organes de captage équipant ladite machine-outil,
**caractérisé en ce que** lesdites pales (10) sont chacune délimitées par deux bordures libres (10a, 10b) s'étendant dans un plan perpendiculaire, ou au moins sensiblement perpendiculaire, par rapport à l'axe (4) de l'outil d'usinage (1), l'une avant (10a) orientée du côté de la partie avant de coupe (5), et l'autre arrière (10b) orientée du côté de la partie arrière d'attachement (6), la mise en rotation dudit outil d'usinage générant alors un flux d'air circulant depuis ladite bordure avant (10a) des pales vers leur bordure arrière (10b).

2. Outil d'usinage rotatif selon la revendication 1, **caractérisé en ce que** les pales (10) s'étendent chacune selon un secteur angulaire compris entre 95° et 100°.

3. Outil d'usinage rotatif selon la revendication 1, **caractérisé en ce que** les pales (10) s'étendent chacune selon un secteur angulaire compris entre 15° et 35°.

4. Outil d'usinage rotatif selon l'une quelconque des revendications 1 à 3,
**caractérisé en ce que** les pales (10) sont au nombre de trois.

5. Outil d'usinage rotatif selon l'une quelconque des revendications 1 à 4,
**caractérisé en ce que** les pales (10) sont associées à un anneau périphérique (12), coaxial au corps d'outil (3).

6. Outil d'usinage rotatif selon la revendication 5, **caractérisé en ce que** l'anneau périphérique (12) a une conformation générale cylindrique, de diamètre constant sur toute sa hauteur.

7. Outil d'usinage rotatif selon la revendication 5, **caractérisé en ce que** l'anneau périphérique a une conformation générale tronconique, sa grande base étant située du côté de la partie de coupe (5) ou du côté de la partie d'attachement (6) en fonction des caractéristiques du flux d'air souhaité.

8. Outil d'usinage rotatif selon l'une quelconque des revendications 5 à 7,
**caractérisé en ce que** la bordure avant (10a) des pales (10) s'étend en saillie de la bordure avant (12a) de l'anneau périphérique (12) associé.

9. Outil d'usinage rotatif selon l'une quelconque des revendications 5 à 8,
**caractérisé en ce que** la bordure arrière (10b) des pales (10) s'étend dans le plan, ou à proximité du plan, passant par la bordure arrière (12b) de l'anneau (12).

10. Outil d'usinage rotatif selon l'une quelconque des revendications 1 à 9,
**caractérisé en ce que** les pales (10) s'étendent chacune à partir d'une bague tubulaire centrale (11), conformée pour permettre la fixation de la turbine d'aspiration (2) au corps d'outil (3).

11. Outil d'usinage rotatif selon l'une quelconque des revendications 5 à 10,
**caractérisé en ce que** les bordures avant (12a) et/ou arrière (12b) de l'anneau périphérique (12), et le cas échéant la bordure avant (11a) de la bague tubulaire centrale (11), présentent une conformation du type chanfreinée ou rayonnée orientée pour limiter les perturbations sur le flux d'air généré.

12. Accessoire formant turbine selon l'une quelconque des revendications 1 à 11, apte à équiper un outil d'usinage rotatif muni de moyens complémentaires de réception prévus à cet effet.
